# EUROPÄISCHE PATENTANMELDUNG

(11) **EP 4 817 383 A1**
(43) Veröffentlichungstag der Anmeldung: **07.10.2026**
(21) Anmeldenummer: 26161319.4
(22) Anmeldetag: 27.02.2026
(51) Int. Cl.: A01B 59/00, A01D 43/08, A01D 47/00, B62D 25/16, E02F 3/36, E02F 9/22

(54) **LANDWIRTSCHAFTLICHE ARBEITSMASCHINE**

(30) Priorität: 04.04.2025 DE 102025113196
(71) Anmelder: CLAAS Saulgau GmbH, 88340 Bad Saulgau (DE)
(72) Erfinder: König, Christian, 88094 Oberteuringen (DE); Blender, Sebastian, 88634 Herdwangen-Schönach (DE)
(74) Vertreter: CLAAS Gruppe

(57) **Zusammenfassung**

Die Erfindung betrifft eine landwirtschaftliche Arbeitsmaschine (1) mit einem Anbaugerät (3) und zumindest einem Hydraulikkuppler (14) zum Verbinden von Hydraulikleitungen (13), wobei der Hydraulikkuppler (14) zumindest eine Festhälfte (16) umfasst, die an der Arbeitsmaschine (1) angeordnet ist, wobei die Festhälfte (16) an einem Kotflügel (5) angeordnet ist.

## Beschreibung

Die Erfindung betrifft eine landwirtschaftliche Arbeitsmaschine mit einem Anbaugerät gemäß dem Oberbegriff des Anspruchs 1.

Die Anbaugeräte für eine landwirtschaftliche Arbeitsmaschine umfassen üblicherweise eine Mehrzahl von hydraulisch angetriebenen Arbeitsaggregaten. Zum Antreiben der Arbeitsaggregate werden die Anbaugeräte mittels einer Mehrzahl von Hydraulikleitungen mit dem Hydrauliksystem der landwirtschaftlichen Arbeitsmaschine gekoppelt.

Zum Verbinden der Hydraulikleitungen ist die Verwendung von Kupplungsvorrichtungen beispielsweise aus der DE19536345C2 bekannt geworden. Eine weitere Kupplungsvorrichtung zum Verbinden von hydraulischen Leitungen ist aus der EP3517818B1 bekannt geworden. Diese Kupplungen ermöglichen es, mehrere hydraulische und elektrische Verbindungen gleichzeitig herzustellen und so den Kuppelvorgang zu vereinfachen. Die Kupplungsvorrichtungen umfassen eine Festhälfte und eine Loshälfte, wobei die Festhälfte üblicherweise ortsfest an dem Anbaugerät angeordnet ist und die Loshälfte der landwirtschaftlichen Arbeitsmaschine zugeordnet ist.

Zum Verbinden der Hydraulikleitungen wird die Loshälfte mit der Festhälfte verbunden. Nachteilig hieran ist, dass die mit der Loshälfte verbundenen Leitungen derart lang ausgeführt werden müssen, sodass diese die unterschiedlichen Positionen der Festhälften für verschiedene Anbaugerätetypen erreicht. Ein weiterer Nachteil, der sich aus der Anbindung der Loshälfte an der landwirtschaftlichen Arbeitsmaschine ergibt, ist, dass kein gut geeigneter Bauraum für eine Parkposition der Loshälfte im entkuppelten Zustand zur Verfügung steht.

Zum Anbinden der Festhälfte an der landwirtschaftlichen Arbeitsmaschine steht in der Regel auf Grund der Vielzahl von Maschinenteilen wenig Bauraum zur Verfügung, wobei zugleich die wenigen geeigneten Positionen schlecht für einen Bediener zugänglich sind.

Es ist deshalb Aufgabe der Erfindung, die beschriebenen Nachteile des Standes der Technik zu vermeiden und insbesondere eine landwirtschaftliche Arbeitsmaschine mit einer Kupplungsvorrichtung zu schaffen, die eine verbesserte Anbauposition aufweist.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird eine landwirtschaftliche Arbeitsmaschine mit einem Anbaugerät und zumindest einem Hydraulikkuppler zum Verbinden von Hydraulikleitungen vorgeschlagen, wobei der Hydraulikkuppler zumindest eine Festhälfte umfasst, die an der Arbeitsmaschine angeordnet ist, wobei die Festhälfte an einem Kotflügel angeordnet ist. Die Erfindung hat erkannt, dass in dem Kotflügel Bauraum zur Anordnung der Festhälfte zur Verfügung steht, wobei zugleich eine an den Kotflügel angeordnete Festhälfte gut zugänglich ist. Demnach kann ein Bediener die Festhälfte in besonders vorteilhafter Weise erreichen, um diese mit einer Loshälfte zu verbinden oder die Loshälfte von der Festhälfte zu trennen.

Eine vorteilhafte Weiterbildung sieht vor, dass die Festhälfte ortsfest in den Kotflügel integriert ist, wobei vorzugsweise die Festhälfte im Wesentlichen flächenbündig zur Oberfläche des Kotflügels angeordnet ist. Die flächenbündige Anordnung der Festhälfte im Kotflügel der Arbeitsmaschine ermöglicht einen optimalen Schutz vor Verschmutzung und erleichtert die Bedienung.

Eine weitere vorteilhafte Weiterbildung sieht vor, dass die Arbeitsmaschine zumindest ein Vorderrad umfasst, wobei der Kotflügel das Vorderrad bereichsweise umschließt. Eine Integration der Festhälfte in einem dem Vorderrad zugeordneten Kotflügel bietet eine besonders gute Zugänglichkeit der Festhälfte für landwirtschaftliche Arbeitsmaschinen, dessen Arbeitsaggregate üblicherweise vorderseitig an der Arbeitsmaschine angeordnet werden.

Weiterhin ist es besonders vorteilhaft, wenn die Festhälfte in einer dem Anbaugerät zugewandten Stirnseite des Kotflügels integriert ist, wobei vorzugsweise das Anbaugerät als ein vorderseitig an der Arbeitsmaschine angeordnetes Vorsatzgerät ausgebildet ist. Eine entsprechende Ausrichtung der Festhälfte in Fahrtrichtung erleichtert das Kuppeln, da der Bediener direkt auf die Festhälfte zugreifen kann.

Gemäß einer vorteilhaften Ausgestaltung kann die Stirnseite des Kotflügels als eine metallische Blende ausgeführt sein. Die Blende verstärkt die Struktur des Kotflügels, sodass eine verbesserte Tragfähigkeit zur Integration der Festhälfte bereitgestellt ist.

Zur Anordnung der Festhälfte an der Blende kann innenseitig an die Blende eine Metallverstärkung zur Halterung der Festhälfte angeordnet sein, wobei die Metallverstärkung vorzugsweise Laschen zur Halterung der Festhälfte umfasst.

Gemäß einer weiteren vorteilhaften Ausgestaltung umfasst der Hydraulikkuppler eine Loshälfte, die an dem Anbaugerät angeordnet ist und mit der Festhälfte kuppelbar ist. Die Loshälfte ist mit den Hydraulikleitungen des Anbaugeräts verbunden und kann zusammen mit den Hydraulikleitungen hin zu der Festhälfte geführt werden.

Besonders vorteilhaft ist es, wenn der Hydraulikkuppler einen nach unten gerichteten Betätigungshebel umfasst. Die ergonomische Hebelanordnung ermöglicht eine bequeme und mühelose Bedienung. Bevorzugt kann der Betätigungshebel an der Loshälfte angeordnet sein.

Zum Koppeln der Festhälfte mit einer Loshälfte ist es besonders vorteilhaft, wenn die Festhälfte eine Mehrzahl von Kupplungsmuffen für Druckmittelleitungen und/oder elektrische Anschlussverbindungen aufweist.

Gemäß einer vorteilhaften Ausgestaltung kann die landwirtschaftliche Arbeitsmaschine als ein selbstfahrender Feldhäcksler ausgebildet sein. Bei einem selbstfahrenden Feldhäckslers gestaltet sich die Anordnung eines Hydraulikkupplers als besonders herausfordernd, da das Anbaugerät des Feldhäckslers im Vergleich zu einer als Mähdrescher ausgeführten landwirtschaftlichen Arbeitsmaschine wesentlich näher an die Vorderräder heranreicht, sodass ein zwischen den Vorderrädern befindlicher Hydraulikkuppler, bzw. eine dort platzierte Festhälfte, unkomfortabel zugänglich ist. Eine Anordnung der Festhälfte an dem Kotflügel schafft somit insbesondere für einen selbstfahrenden Feldhäcksler eine für einen Bediener besonders ergonomisch zugängliche Position.

Die vorliegende Erfindung wird nachstehend anhand eines in den Zeichnungen dargestellten Ausführungsbeispiels näher erläutert. Es zeigen:
- Figur 1: eine schematische Darstellung eines selbstfahrenden Feldhäckslers in Seitenansicht;
- Figur 2: eine perspektivische Frontansicht eines selbstfahrenden Feldhäckslers mit einem Hydraulikkuppler;
- Figur 3: schematisch und exemplarisch eine Blende mit einer darin integrierten Festhälfte eines Hydraulikkupplers;
- Figur 4: schematisch und exemplarisch eine perspektivische Ansicht der Innenseite einer Blende gemäß Figur 3;
- Figur 5: schematisch und exemplarisch einen Hydraulikkuppler in einem mit gekuppelten Zustand.

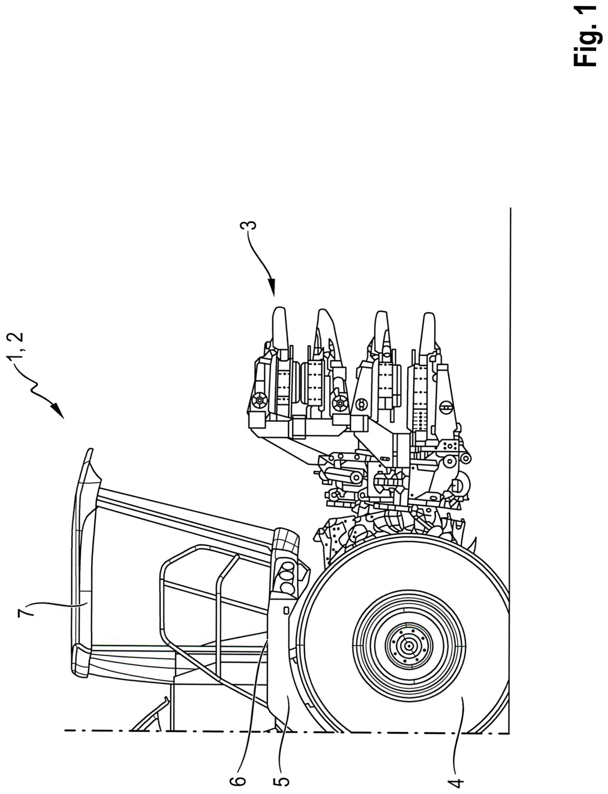

Figur 1 zeigt schematisch einen Ausschnitt einer an sich bekannten und als Feldhäcksler 2 ausgeführten landwirtschaftlichen Arbeitsmaschine 1, die in ihrem frontseitigen Bereich ein als Vorsatzgerät ausgebildetes Anbaugerät 3 aufnimmt. Das Ausführungsbeispiel gemäß Figur 1 umfasst als Anbaugerät 3 einen klappbaren Maispflücker. Das von dem Erntevorsatz 3 aufgenommene Erntegut wird zur weiteren Verarbeitung einer nicht näher dargestellten Häckseleinrichtung des Feldhäckslers 2 zugeführt. Der Feldhäcksler 2 umfasst im vorderen Bereich zwei einander gegenüberliegend angeordnete Vorderräder 4 und im hinteren Bereich nicht näher dargestellte Hinterräder. Die Vorderräder 4 sind obenseitig abschnittsweise von jeweils einem Kotflügel 5 umgeben. Hier und vorzugsweise bildet einer der Kotflügel 5 auf einer dem Vorderreifen 4 abgewandten Seite ein Fahrerstandspodest 6 aus, über das eine Fahrerkabine 7 des Feldhäckslers 2 zugänglich ist.

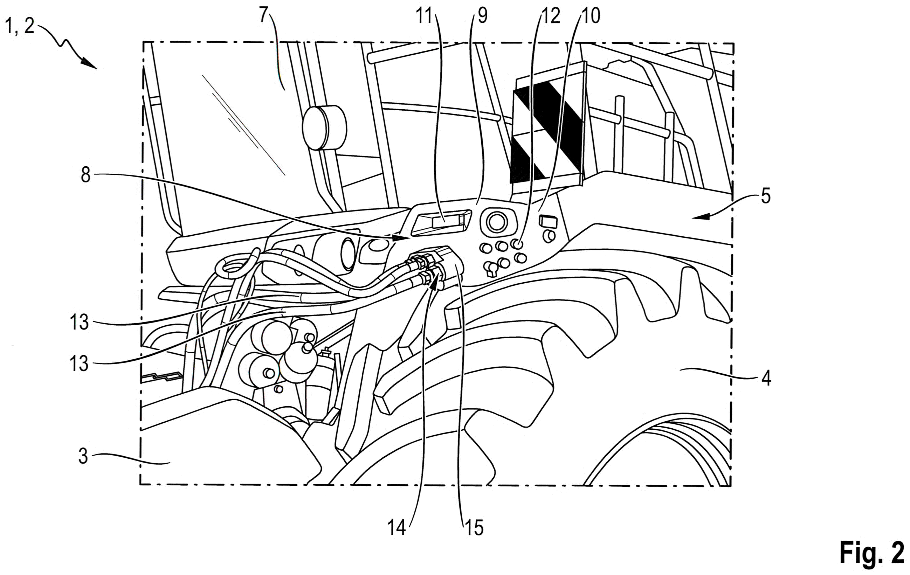

Figur 2 zeigt den Feldhäcksler 2 in einer perspektivischen Frontansicht. Eine dem Anbaugerät 3 zugewandte Stirnseite 8 des Kotflügels 5 ist als eine Blende 9 ausgeführt. Hier und vorzugsweise ist die Blende 9 aus einem metallischen Werkstoff ausgebildet. Die Blende 9 erstreckt sich einteilig entlang der Stirnseite 8 sowie abschnittsweise entlang einer Längsseite 10 des Kotflügels 5. In die Blende 9 sind Leuchtmittel 11 sowie Betätigungsmittel 12, insbesondere Druckknöpfe integriert. Das Anbaugerät 3 umfasst eine Mehrzahl von an sich bekannten und nicht näher dargestellten, hydraulisch angetriebenen Arbeitsorganen und/oder Aktoren.

Eine Mehrzahl von Hydraulikleitungen 13 sind dazu vorgesehen, um die hydraulisch angetriebenen Arbeitsorgane und/oder Aktoren an ein Hydrauliksystem des Feldhäckslers 2 anzuschließen. Zum Koppeln der Hydraulikleitungen 13 mit dem Hydrauliksystem des Feldhäckslers 2 ist ein Hydraulikkuppler 14 vorgesehen. Der Hydraulikkuppler 14 umfasst eine Loshälfte 15 und ein Festhälfte 16, die mit einem Koppelmechanismus miteinander verbindbar bzw. kuppelbar sind. Die Hydraulikleitungen 13 des Anbaugeräts 3, vorzugsweise sämtliche Hydraulikleitungen 13 des Anbaugeräts 3, sind an die Loshälfte 15 angeschlossen.

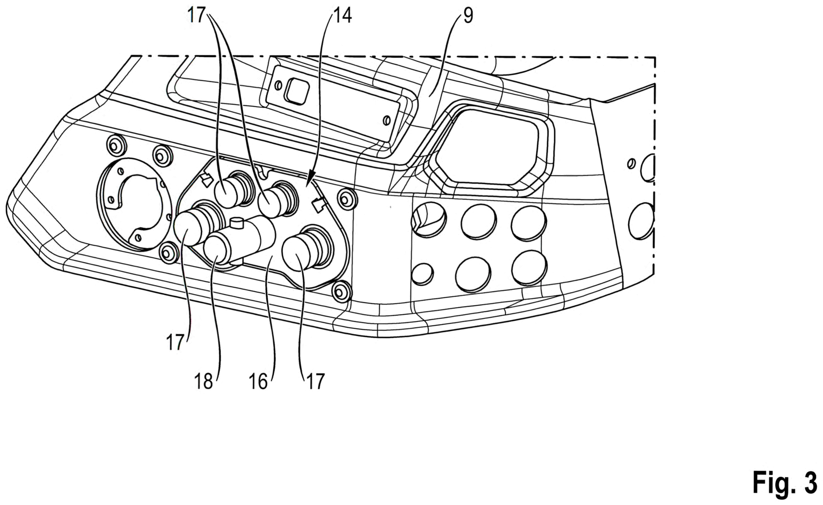

Wie in Fig. 3 dargestellt, ist die Festhälfte 16 des Hydraulikkupplers 14 in den Kotflügel 5 ortsfest integriert, wobei die Festhälfte 16 im Wesentlichen flächenbündig zur Oberfläche der Blende 9 angeordnet ist. Hier und vorzugsweise ist die Festhälfte 16 in einen Kotflügel 5 integriert, der eines der Vorderräder 4 abschnittsweise umschließt. Die Festhälfte 16 umfasst eine Mehrzahl von Kupplungsmuffen 17 an die die Hydraulikleitungen 13 anschließbar sind. Weiterhin ist an der Festhälfte 16 ein Verriegelungsbolzen 18 angeordnet, an dem die Loshälfte 15 in einem gekoppelten Zustand mit der Festhälfte 16 gehaltert ist.

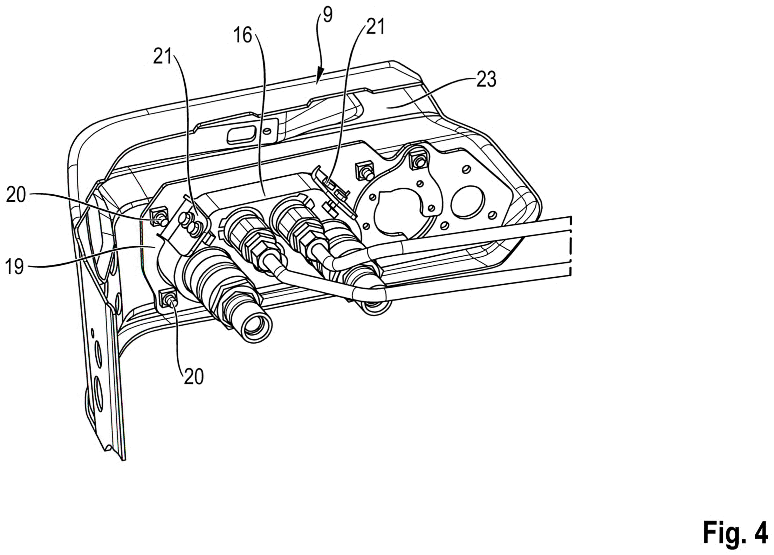

In Fig. 4 ist die Innenseite 23 der Blende 9 in einer perspektivischen Darstellung abgebildet. An die Innenseite 23 der Blende 9 ist eine Metallverstärkung 19 mittels Befestigungsmitteln 20, insbesondere Schrauben, ortsfest angeordnet. Die Metallverstärkung 19 umschließt die Festhälfte 16 außenseitig, wobei die Metallverstärkung 19 mehrere Laschen 21 zur Befestigung der Festhälfte 16 umfasst. Hier und vorzugsweise ist die Festhälfte 16 mit den Laschen 21 der Metallverstärkung 19 verschraubt.

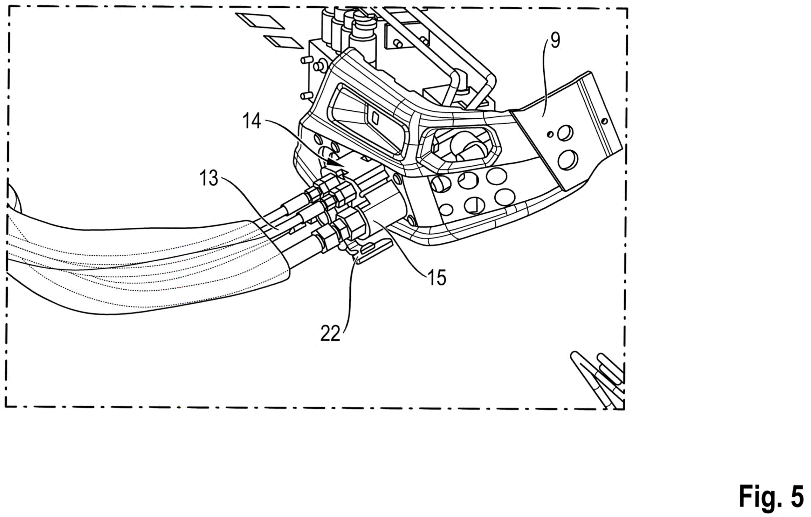

Fig. 5 zeigt die Loshälfte 15 in einem mit der Festhälfte 16 gekuppelten Zustand. Mittels eines Betätigungshebels 22 ist der Koppelmechanismus zum Verbinden der Loshälfte 15 mit dem Verriegelungsbolzen 18 betätigbar. Eine verbesserte Zugänglichkeit des Betätigungshebels 22 ergibt sich dadurch, dass der Betätigungshebel 22 nach unten gerichtet an der Loshälfte 15 angeordnet ist. Mit anderen Worten befindet sich der Betätigungshebel 22 an einer dem Vorderrad 4 zugewandten Seite der Loshälfte 15.

### Bezugszeichenliste:

- 1: Landwirtschaftliche Arbeitsmaschine
- 2: Feldhäcksler
- 3: Anbaugerät
- 4: Vorderrad
- 5: Kotflügel
- 6: Fahrerstandspodest
- 7: Fahrerkabine
- 8: Stirnseite
- 9: Blende
- 10: Längsseite
- 11: Leuchtmittel
- 12: Betätigungsmittel
- 13: Hydraulikleitung
- 14: Hydraulikkuppler
- 15: Loshälfte
- 16: Festhälfte
- 17: Kupplungsmuffe
- 18: Verriegelungsbolzen
- 19: Metallverstärkung
- 20: Befestigungsmittel
- 21: Lasche
- 22: Betätigungshebel
- 23: Innenseite

## Patentansprüche

1. Landwirtschaftliche Arbeitsmaschine (1) mit einem Anbaugerät (3) und zumindest einem Hydraulikkuppler (14) zum Verbinden von Hydraulikleitungen (13), wobei der Hydraulikkuppler (14) zumindest eine Festhälfte (16) umfasst, die an der Arbeitsmaschine (1) angeordnet ist,
**dadurch gekennzeichnet, dass**
die Festhälfte (16) an einem Kotflügel (5) angeordnet ist.

2. Landwirtschaftliche Arbeitsmaschine (1) nach Anspruch 1, **dadurch gekennzeichnet, dass** die Festhälfte (16) ortsfest in den Kotflügel (5) integriert ist, wobei vorzugsweise die Festhälfte (16) im Wesentlichen flächenbündig zur Oberfläche des Kotflügels (5) angeordnet ist.

3. Landwirtschaftliche Arbeitsmaschine (1) nach einem der Ansprüche 1 bis 2, **dadurch gekennzeichnet, dass** die Arbeitsmaschine (1) zumindest ein Vorderrad (4) umfasst, wobei der Kotflügel (5) das Vorderrad (4) bereichsweise umschließt.

4. Landwirtschaftliche Arbeitsmaschine (1) nach einem der Ansprüche 1 bis 3, **dadurch gekennzeichnet, dass** die Festhälfte (16) in einer dem Anbaugerät (3) zugewandten Stirnseite (8) des Kotflügels (5) integriert ist, wobei vorzugsweise das Anbaugerät (3) als ein vorderseitig an der Arbeitsmaschine (1) angeordnetes Vorsatzgerät ausgebildet ist.

5. Landwirtschaftliche Arbeitsmaschine (1) nach Anspruch 4, **dadurch gekennzeichnet, dass** die Stirnseite (8) des Kotflügels (5) als eine metallische Blende (9) ausgeführt ist.

6. Landwirtschaftliche Arbeitsmaschine (1) nach Anspruch 5, **dadurch gekennzeichnet, dass** innenseitig an die Blende (9) eine Metallverstärkung (19) zur Halterung der Festhälfte (16) angeordnet ist, wobei die Metallverstärkung (19) vorzugsweise Laschen (21) zur Halterung der Festhälfte (16) umfasst.

7. Landwirtschaftliche Arbeitsmaschine (1) nach einem der Ansprüche 1 bis 6, **dadurch gekennzeichnet, dass** der Hydraulikkuppler (14) eine Loshälfte (15) umfasst, die an dem Anbaugerät (3) angeordnet ist und mit der Festhälfte (16) kuppelbar ist.

8. Landwirtschaftliche Arbeitsmaschine (1) nach einem der Ansprüche 1 bis 7, **dadurch gekennzeichnet, dass** der Hydraulikkuppler (14) einen nach unten gerichteten Betätigungshebel (12) umfasst.

9. Landwirtschaftliche Arbeitsmaschine (1) nach einem der Ansprüche 1 bis 8, **dadurch gekennzeichnet, dass** die Festhälfte (16) eine Mehrzahl von Kupplungsmuffen (17) für Hydraulikleitungen (13) und/oder elektrische Anschlussverbindungen aufweist.

10. Landwirtschaftliche Arbeitsmaschine (1) nach einem der Ansprüche 1 bis 9, **dadurch gekennzeichnet, dass** die landwirtschaftliche Arbeitsmaschine (1) als ein selbstfahrender Feldhäcksler (2) ausgebildet ist.
